## Europäisches Patentamt

## European Patent Office

## Office européen des brevets

(19)

(11) Veröffentlichungsnummer: **0 149 743**
**B1**

(12) # EUROPÄISCHE PATENTSCHRIFT

(45) Veröffentlichungstag der Patentschrift:
**11.05.88**

(21) Anmeldenummer: **84113596.5**

(22) Anmeldetag: **10.11.84**

(51) Int. Cl.⁴: **F 15 B 11/02, F 15 B 13/044**

(54) **Hydraulische Steuereinrichtung.**

(30) Priorität: **14.12.83 DE 3345192**

(43) Veröffentlichungstag der Anmeldung:
**31.07.85 Patentblatt 85/31**

(45) Bekanntmachung des Hinweises auf die Patenterteilung:
**11.05.88 Patentblatt 88/19**

(84) Benannte Vertragsstaaten:
**DE FR GB IT**

(56) Entgegenhaltungen:
**EP - A - 0 061 842**
**EP - A - 0 115 590**
**DE - A - 2 705 054**
**DE - A - 2 725 917**
**DE - A - 2 827 339**
**DE - B - 1 928 896**
**DE - C - 1 295 896**

(73) Patentinhaber: **ROBERT BOSCH GMBH, Postfach 50, D-7000 Stuttgart 1 (DE)**

(72) Erfinder: **Beck, Walter, Vöhingerweg 3, D-7141 Schwieberdingen (DE)**
Erfinder: **Schwerin, Günther, Hohenstaufenstrasse 15, D-7141 Möglingen (DE)**

ACTORUM AG

## Beschreibung

Die Erfindung geht aus von einer hydraulischen Steuereinrichtung für ein von einem Hydromotor angetriebenes, insbesondere an einem landwirtschaftlichen Fahrzeug angebautes Arbeitsgerät nach der Gattung des Hauptanspruchs.

In einer nach Artikel 54(3) EPÜ zum Stand der Technik zählenden älteren Anmeldung EP-A-0 115 590 (83 112 172) wurde bereits eine derartige Steuereinrichtung vorgeschlagen, bei der bei dem Steuerschieber zur Steuerung eines einfachwirkenden Krafthebers ein als Druckkompensationsventil und als Druckminderer arbeitendes Drosselventil vorgeschaltet ist. Der Steuerschieber grenzt hier mit seinen stirnseitigen Enden an nach aussen hin offene Kammern und wird mechanisch betätigt. Es sind hier keine Mittel zur hydraulischen Dämpfung des Steuerschiebers angegeben; somit stellt sich hier auch nicht das Problem, dem Steuerschieber zugeordnete Dämpfungskammern zu entlüften.

Ferner ist aus der DE-C-1 295 896 ein proportional arbeitendes Steuerventil bekannt, auf dessen Steuerglied ein durch getaktete Impulse angesteuerter Elektromagnet, eine Rückstellfeder sowie eine doppeltwirkende Dämpfungseinrichtung einwirken. Zwei Dämpfungskammern sind über eine Ausgleichsleitung mit einer Drosselstelle miteinander verbunden. Durch Impulsdauermodulation kann dabei das Steurglied in jede beliebige Zwischenlage gebracht werden. Bei einem derartigen Steuerventil kann nun das Problem auftreten, dass in die flüssigkeitsgefüllten Dämpfungskammern Gaseinschlüsse gelangen und die Wirkung der Dämpfungseinrichtung gefährden. So kann z.B. bei der Montage oder durch austretendes Lecköl in die Dämpfungskammern Luft eintreten, die selbst wie eine schwache Feder wirkt und damit die Dämpfung des Steuergliedes widerstandslos macht bzw. deren Charakteristik ändert. Gerade bei einer derartigen Verstelleinrichtung mit getaktet angesteuerten Magneten hängt die genaue Verstellung des Steuergliedes auch von der Güte der Dämpfungseinrichtung ab. Zudem wird die vorbekannte Dämpfungseinrichtung den Anforderungen an einen lang andauernden Betrieb des Steuerventils nicht gerecht, da insbesondere für eine ständige Entlüftung der Dämpfungskammer nicht gesorgt wird. Fernerhin baut das Steuerventil relativ aufwendig, da die Dämpfungseinrichtung getrennt vom eigentlichen Ventil angeordnet ist.

Ferner ist aus der DE-A-2 725 917 ein von schaltenden Magneten betätigtes 4-Wegeventil bekannt, dessen federzentrierter Steuerschieber stirnseitig in Dämpfungskammern ragt, die über einen Ausgleichskanal mit Drossel miteinander verbunden sind. Am Steuerschieber aussen angeordnete Endbunde weisen Anfräsungen mit Steuerkanten auf, über die in Endstellungen des Steuerschiebers Druckmittel aus benachbarten Rücklaufkammern die Dämpfungskammern auffüllen kann. Auch hier können Lufteinschlüsse in den Dämpfungskammern auftreten und die Dämpfungscharakeristik ungünstig beeinflussen, zumal wenn die Drücke im Rücklaufsystem niedrig sind.

Aufgabe der Erfindung ist es, bei einer hydraulischen Steuereinrichtung der eingangs genannten Art eine Dämpfungseinrichtung möglichst einfach so auszubilden, dass sich ihre Dämpfungseigenschaften im Betrieb möglichst wenig ändern.

Die erfindungsgemässe Steuereinrichtung mit den kennzeichnenden Merkmalen des Hauptanspruchs hat demgegenüber den Vorteil, dass sie durch stetige Entlüftung der Dämpfungskammern eine stets gleichbleibend gute Dämpfung erreicht und somit die genaue Arbeitsweise des Steuerventils nicht beeinträchtigt wird. Die Dämpfungskammern werden im Betrieb von einem Druck beaufschlagt, der erheblich unter dem für den Hydromotor benötigten Arbeitsdruck liegt Dieser Zwischendruck reicht aus, um eventuell in den Dämpfungskammern vorhandene Lufteinschlüsse so vorzuspannen, dass die Federrate für das eingeschlossene Volumen steil ansteigt und damit der störende Einfluss von Lufteinschlüssen verhindert wird. Durch die Beaufschlagung mit einem Zwischendruck können aus den Dämpfungskammern Leckölströme zu benachbarten Rücklaufkammern entweichen und dabei im Druckmittel gelöste Luft mitführen. Selbst bei lang andauerndem Betrieb der Steuereinrichtung ergibt dies eine ausreichende Entlüftung, so dass die Wirksamkeit der Dämpfungseinrichtung erhalten bleibt. Diese Dämpfungseinrichtung erfordert keinen Eingriff in einen Neutralumlauf und ist unabhängig von sonstigen Drücken im Rücklauf oder in einem Weiterlaufkanal. Zudem ist von Vorteil, dass infolge des Zwischendruckes in den Dämpfungskammern bei einer elektromagnetischen Ansteuerung des Steuerschiebers keine hochdruckdichten Magnete notwendig sind. Auch die Leckölströme für die Entlüftung und damit verbundene hydraulische Verluste sind relativ niedrig. Zudem baut die Dämpfungseinrichtung relativ platzsparend und kostengünstig.

Durch die in den Unteransprüchen aufgeführten Massnahmen sind vorteilhafte Weiterbildungen und Verbesserungen der im Hauptanspruch angegebenen Steuereinrichtung möglich. Besonders vorteilhaft ist eine Ausbildung gemäss Anspruch 6, wenn der Steuerschieber durch Elektromagnete betätigt wird, die als getaktet angesteuerte Schaltmagnete ausgebildet sind.

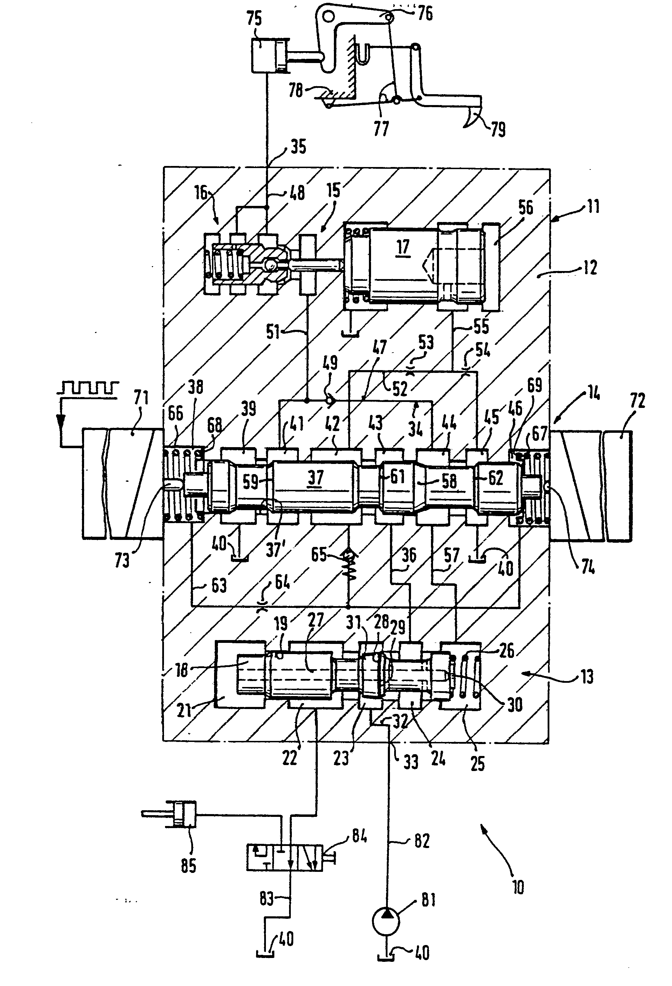

Ein Ausführungsbeispiel der Erfindung ist in der Zeichnung dargestellt, deren einzige Figur eine hydraulische Steuereinrichtung in vereinfachter Darstellung in Stellung Senken zeigt.

Beschreibung des Ausführungsbeispiels.

Die einzige Figur zeigt eine Steuereinrichtung 10 mit einem Regelwegeventil 11, das zur Hubwerksregelung an einem landwirtschaftlichen Fahrzeug, insbesondere einem Traktor mit angelenktem Pflug, verwendet wird.

Das Regelwegeventil 11 hat ein Gehäuse 12, in dem in drei zueinander parallelen Achsen ein Drosselventil 13, ein Steuerventil 14 sowie ein Sperrblock 15, bestehend aus Sperrventil 16 und zugehörigem Aufstosskolben 17, angeordnet sind.

Das Drosselventil 13 hat einen Drosselschieber 18, der im Gehäuse 12 in einer Schieberbohrung 19 gleitet. In der Schieberbohrung 19 sind nebeneinanderliegend, bezogen auf die Figur von links nach rechts gesehen, durch ringförmige Erweiterungen ein Druckraum 21, ein Weiterlaufraum 22, ein Einlassraum 23, Ein Auslassraum 24 sowie ein Federrraum 25 ausgebildet. Der Drosselschieber 18 wird von einer in dem Federraum 25 angeordneten Feder 26 sowie von den Drükken in dem Federraum 25 und dem Druckraum 21 beaufschlagt. Zu diesem Zweck steht der Druckraum 21 über im Drosselschieber 18 angeordnete Steuerkanäle 27 mit dem Auslassraum 24 in Verbindung. Die Feder 26 belastet den Drosselschieber 18 nach links in Richtung einer nicht gezeigten Ausgangsstellung, in welcher er mit einem mittleren Kolbenabschnitt 28 die Verbindung vom Einlassraum 23 zum Weiterlaufraum 22 blockiert. Ferner ist im Drosselschieber 18 eine Vorsteuerdrossel 30 angeordnet, welche zwischen die Steuerkanäle 27 und den Federraum 25 geschaltet ist, so dass deren Druckgefälle den Drosselschieber 18 gegen die Feder 26 belasten kann. Am Kolbenabschnitt 28 ist auf der dem Auslassraum 24 zugewandten Seite eine erste Steuerfase 29 angeordnet, welche in der Ausgangsstellung des Drosselschiebers 18 die Verbindung vom Einlassraum 23 zum Auslassraum 24 voll aufsteuert. Ausserdem ist am Kolbenabschnitt 28 an dessen anderer Stirnseite eine zweite Steuerfase 31 ausgebildet, welche zum Steuern der Verbindung vom Einlassraum 23 zum Weiterlaufraum 22 dient. Der Einlassraum 23 ist über einen ersten Leitungsabschnitt 32 mit einem Eingang 33 des Regelwegeventils 11 verbunden, von dem eine Arbeitsleitung 34 zu einem Ausgang 35 führt, wobei in die Arbeitsleitung 34 hintereinander das Drosselventil 13, das Steuerventil 14 sowie das Sperrventil 16 geschaltet sind. Als Teil dieser Arbeitsleitung 34 führt vom Auslassraum 24 ein zweiter Leitungsabschnitt 36 zum nachfolgenden Steuerventil 14.

Das Steuerventil 14 hat einen Steuerschieber 37, der in einer zweiten Schieberbohrung 37' dicht und gleitend geführt ist. In letzterer (37') sind wiederum nebeneinanderliegend und, bezogen auf die Figur, von links nach rechts gesehen eine erste Dämpfungskammer 38, eine erste Rücklaufkammer 39, eine Ablaufkammer 41, eine Steuerkammer 42, eine erste (43) sowie eine zweite Arbeitskammer 44, eine zweite Rücklaufkammer 45 sowie eine zweite Dämpfungskammer 46 angeordnet. Die beiden Rücklaufkammern 39, 45 sind zu einem Tank 40 entlastet. In die erste Arbeitskammer 43 mündet der zweite Abschnitt 36 der Arbeitsleitung 34. Von der zweiten Arbeitskammer 44 führt ein dritter Leitungsabschnitt 47 als Teil der Arbeitsleitung 34 zum Sperrventil 16, von dem ein vierter Leitungsabschnitt 48 zum Ausgang 35 führt. In den dritten Leitungsabschnitt 47 ist ein die zweite Arbeitskammer 44 absicherndes Rückschlagventil 49 geschaltet. Ferner führt vom Ausgang 35 über das Sperrventil 16 eine Rücklaufleitung 51 zur Ablaufkammer 41 und weiter über die erste Rücklaufkammer 39 zum Tank 40. Arbeitsleitung 34 und Rücklaufleitung 51 sind teilweise, nämlich im Bereich des Sperrventils 16 identisch. Von der Steuerkammer 42 führt eine erste Steuerleitung 52 über eine erste (53) und eine zweite Drosselstelle 54 zur zweiten Rücklaufkammer 45 und damit weiter zum Tank 40. Die erste Steuerleitung 52 weist im Bereich zwischen den beiden Drosselstellen 53, 54 eine Abzweigung 55 auf, welche den jeweiligen Zwischendruck einer dem Aufstosskolben 17 zugeordneten Druckkammer 56 zuleitet. Ferner verbindet eine zweite Steuerleitung 57 die zweite Arbeitskammer 44 im Steuerventil 14 mit dem Federraum 25 im Drosselventil 13.

Am Steuerschieber 37 selbst ist eine erste Steuerkante 58 ausgebildet, um den über die Arbeitsleitung 34 zufliessenden Druckmittelstrom proportional zur Auslenkung des Steuerschiebers 37 zu steuern. Während in einer Hebenstellung des Steuerschiebers 37 diese erste Steuerkante 58 die Verbindung zwischen den beiden Arbeitskammern 43, 44 aufsteuert, unterbricht sie in der gezeichneten Senkenstellung und in einer Neutralstellung diese Verbindung. Ferner weist der Steuerschieber 37 eine zweite Steuerkante 59 auf, um in entsprechender Weise den über die Rücklaufleitung 51 zum Tank 40 abfliessenden Druckmittelstrom zu steuern. Während in der Hebenstellung sowie in der Neutralstellung diese zweite Steuerkante 59 die Verbindung von der Ablaufkammer 41 zur ersten Rücklaufkammer 39 unterbricht, ist in der gezeichneten Senkenstellung diese Verbindung proportional zur Schieberauslenkung aufgesteuert. Der Steuerschieber 37 hat fernerhin eine dritte Steuerkante 61, mit der er die Verbindung zwischen der ersten Arbeitskammer 43 und der Steuerkammer 42 schaltet und somit eine Verbindung über die erste Steuerleitung 52 zum Tank 40 beeinflusst. In den Stellungen Neutral und Heben blockiert diese dritte Steuerkante 61 die Verbindung von der Arbeitsleitung 34 zur ersten Steuerleitung 52, während sie in der gezeichneten Stellung Senken aufgesteuert wird. Ferner weist der Steuerschieber 37 eine vierte Steuerkante 62 auf, mit der er die Verbindung von der zweiten Arbeitskammer 44 zur zweiten Rücklaufkammer 45 beeinflusst und somit die Entlastung des Federraums 25 im Drosselventil 13 steuert. Diese vierte Steuerkante 62 öffnet ihre zugeordnete Verbindung in den Stellungen Neutral und Senken.

Die beiden Dämpfungskammern 38, 46 sind miteinander über einen Ausgleichskanal 63 verbunden, in den eine Drossel 64 geschaltet ist. Der Ausgleichskanal 63 ist über ein federbelastetes Rückschlagventil 65 mit der Steuerkammer 42 so verbunden, dass das Rückschlagventil 65 zum Ausgleichskanal 63 hin öffnet. In jeder Dämpfungskammer 38 bzw. 46 ist eine Rückstellfeder 66 bzw. 67 sowie ein Federteller 68 bzw. 69 angeordnet, welche bei nicht betätigtem Antrieb den Steuerschieber 37 in seiner Neutralstellung zentrieren. Beide Dämpfungskammern 38, 46 sind nach aussen hin durch Elektromagnete 71, 72 verschlossen, die beide als einfache Schaltmagnete ausgebildet sind und die in getakteter Weise nach Art einer Pulsdauermodulation angesteuert werden. Die beweglichen Anker der Schaltmagnete 71, 72 stehen über Betätigungsstössel 73 bzw. 74 mit dem Steuerschieber 37 in Wirkverbindung.

Der am Ausgang 35 des Regelwegeventils 11 angeschlossene einfachwirkende Hydromotor 75 ist ein Kraftheber, der über einen Hubarm 76 und ein übliches Dreipunktgestänge 77 einen am Traktorrahmen 78 angelenkten Pflug 79 betätigen kann.

Der Eingang 33 des Regelwegeventils 11 wird von einer Pumpe 81 über eine Zulaufleitung 82 mit Druckmittel versorgt. In die Zulaufleitung 82 kann bei Bedarf ein vorgeschaltetes Wegeventil mit zugeordnetem Verbraucher geschaltet werden.

Von dem Weiterlaufraum 22 im Drosselventil 13 führt eine Ablaufleitung 83 zum Tank 40. In dieser Ablaufleitung 83 ist ein nachgeschaltetes Wegeventil 84 angeordnet, das einen zweiten Hydromotor 85 steuern kann.

Die Steuereinrichtung 10 ist demnach für einen offenen Kreislauf ausgebildet.

Die Wirkungsweise der Steuereinrichtung 10 wird wie folgt erläutert:

Es sei davon ausgegangen, dass be nicht erregten Elektromagneten 71, 72 der Steuerschieber 37 von seinen Rückstellfedern 66, 67 in seiner Neutralstellung zentriert ist. Dann sind die erste (58), die zweite (59) sowie die dritte Steuerkante 61 geschlossen, nur die vierte Steuerkante 62 öffnet die Verbindung von der zweiten Arbeitskammer 44 zur zweiten Rücklaufkammer 45. Von dem von der Pumpe 81 in den Weiterlaufraum 22 des Drosselventils 13 geförderten Druckmittelstrom zweigt ein kleiner Steuerölstrom ab und fliesst vorbei an der drosselnden ersten Steuerfase 29 in den Auslassraum 24, über die Steuerkanäle 27 und die Vorsteuerdrossel 30 in den Federraum 25 und über die zweite Steuerleitung 57 und das Steuerventil 14 weiter zum Tank 40. Dieser Vorsteuerölstrom verursacht an der Vorsteuerdrossel 30 ein Druckgefälle, das den Drosselschieber 18 gegen die Kraft seiner Feder 26 nach rechts auslenkt. Der Drosselschieber 18 arbeitet somit als Stromregelschieber, der den zum Tank 40 abfliessenden Steuerölstrom konstant und möglichst niedrig hält und dabei den grössten Teil des von der Pumpe 81 geförderten Druckmittelstroms weitgehend ungedrosselt in die Ablaufleitung 83 und weiter zum Tank 40 steuert. Solange keiner der Hydromotoren 75, 85 betätigt wird, sind die Energieverluste relativ gering.

Soll nun zum Heben des Pfluges 79 ein Druckmittelstrom über das Regelwegeventil 11 zum Kraftheber 75 strömen, so wird der zweite Elektromagnet 72 getaktet. Der Schaltmagnet 72 wird dabei durch Impulse, deren Pulsdauer verstellbar ist, ständig ein und ausgeschaltet. Während der Dauer des Impulses drückt der Betätigungsstössel 74 den Steuerschieber 37 nach links, wobei dieser aus der ersten Dämpfungskammer 38 Druckmittel über die Ausgleichsleitung 63 und die Drossel 64 in die zweite Dämpfungskammer 46 zu drücken versucht. In der Zeit zwischen zwei Impulsen, also bei abgeschaltetem Elektromagnet 72, versucht die Rückstellfeder 66 den aus seiner Neutralstellung nach links in Hebenstellung ausgelenkten Steuerschieber 37 wieder nach rechts zu verstellen, wobei er Druckmittel aus der zweiten Dämpfungskammer 46 über die Ausgleichsleitung 63 und die Drossel 64 zurück in die erste Dämpfungskammer 38 drücken muss. Bei gleichbleibendem Taktmuster der Impulse am Schaltmagnet 72 kann somit durch Verstellen der Impulsdauer der Steuerschieber 37 in jede beliebige Stellung zwischen Mittelstellung und maximal ausgelenkter Endstellung bewegt werden, wie dies an sich aus dem eingangs erwähnten Stand der Technik bekannt ist. Im Bereich der Hebenstellung ist nur die erste Steuerkante 58 mehr oder weniger weit aufgesteuert, während die vierte Steuerkante 62 ihre zugeordnete Verbindung blockiert. Es fliesst somit ein Druckmittelstrom von der Pumpe 81 über die Arbeitsleitung 34 mit Drosselventil 13, Steuerventil 14 und geöffnetes Sperrventil 16 zum Kraftheber 75. Der Druck stromaufwärts von der ersten Steuerkante 58 wirkt über die Steuerkanäle 27 auch im Druckraum 21 auf den Drosselschieber 18. Der Druck stromabwärts von der ersten Steuerkante 58 wirkt über die zweite Steuerleitung 57 im Federraum 25 des Drosselventils 13. Solange das zweite Wegeventil 84 in der Ablaufleitung 83 nicht betätigt wird, wird während des Hebenvorganges die zweite Steuerfase 31 am Drosselschieber 18 die Verbindung vom Einlassraum 23 zum Weiterlaufraum 22 so weit abgedrosselt, dass das über die erste Steuerkante 58 verfügbare Druckgefälle der von der Feder 26 am Drosselschieber 18 ausgeübten Kraft entspricht und somit konstant gehalten wird. Der Drosselschieber 18 arbeitet somit als Druckwaage zu der als Messdrosselstelle dienenden ersten Steuerkante 58, so dass eine lastkompensierte, proportionale Hebensteuerung des Krafthebers 75 möglich ist. Da während des Hebenvorganges die dritte Steuerkante 61 die Verbindung zwischen erster Arbeitskammer 43 und Steuerkammer 42 blockiert, kann sich in der Steuerkammer 42 unbeeinflusst von der Grösse der Last am Kraftheber 75 kein dem Arbeitsdruck entsprechendes Druckniveau ausbilden. Dies gilt auch dann, wenn während des Hebenvorganges mit dem Regelwegeventil 11 das zweite Wegeventil 84 betätigt wird und der zweite Hydromotor 85 einen höheren Druck benötigt als zum Heben des Krafthebers 75 notwendig ist. In diesem Fall drosselt die erste Steuerkante 29 am Drosselschieber 18 die Verbindung vom Einlassraum 23 zum Auslassraum 24 an, wobei die zweite Steuerkante 31 weiter aufsteuert. Der Drosselschieber

18 arbeitet somit nunmehr als Druckminderer.

Soll nun zum Senken des Pfluges 79 Druckmittel aus dem Kraftheber 75 entweichen, so wird der erste Schaltmagnet 71 getaktet um somit den Steuerschieber 37 aus seiner Neutralstellung heraus nach rechts in die gezeichnete Senkenstellung zu bringen. Durch entsprechende Pulsdauer modulation der Eingangssignale am Schaltmagnet 71 wird dabei der Steuerschieber 37 gegen die Kraft der Rückstellfeder 67 ausgelenkt, wobei seine zweite Steuerkante 59 proportional zur Auslenkung die Rücklaufleitung 51 zum Tank 40 entlastet. Gleichzeitig öffnet die dritte Steuerkante 61 die Verbindung von der ersten Arbeitskammer 43 zur Steuerkammer 42, so dass über die erste Steuerleitung 52 mit den beiden Drosselstellen 53, 54 ein Steuerölstrom zum Tank 40 abfliessen kann. Der stromaufwärts der zweiten Drosselstelle 54 abgegriffene Druck wirkt auf den Aufstosskolben 17, der das vorgesteuerte Sperrventil 16 öffnet. Vom Kraftheber 75 kann somit Druckmittel über das Sperrventil 16 und die Rücklaufleitung 51 zum Tank 40 abströmen, wobei die zweite Steuerkante 59 die Grösse dieses Stromes bestimmt. Das Rückschlagventil 49 verhindert dabei, dass zurückfliessendes Druckmittel von der Rücklaufleitung 51 in die zweite Arbeitskammer 44 abströmen kann. Solange während des Senkenvorgangs mit dem Regelwegeventil 11 das nachgeschaltete Wegeventil 84 nicht betätigt ist, wird die zweite Steuerfase 31 die Verbindung vom Einlassraum 23 zum Weiterlaufraum 22 nur soweit androsseln, dass sich im Auslassraum 24 ein Druck aufbauen kann, welcher der Feder 26 das Gleichgewicht hält. Der Federraum 25 im Drosselventil 13 ist dabei über die zweite Steuerleitung 57 und den Steuerschieber 37 zum Tank 40 entlastet. Der über die dritte Steuerkante 61 des Steuerschiebers 37 in die Steuerkammer 42 gelangende Steuerölstrom hat somit ein konstantes Druckniveau, dessen Grösse durch die Feder 26 im Drosselventil 13 bestimmt wird. Dieser Zwischendruck in der Steuerkammer 42 ist wesentlich niedriger als der während eines Hebenvorgangs am Kraftheber 75 benötigte Arbeitsdruck und auch während des ganzen Senkenvorganges konstant. Dieser Zwischendruck gelangt nun über das Rückschlagventil 65 in die Ausgleichsleitung 63 und damit in beide Dämpfungskammern 38 bzw. 46. Wenn nun in diesen Dämpfungskammern 38 bzw. 46 aus irgendwelchen Gründen Lufteinschlüsse vorhanden sind, so wird diese Luft durch den Zwischendruck vorgespannt, wodurch die auf das Volumen bezogene Federrate sehr steil mit dem Druck ansteigt. Die vorgespannte Luft stört daher die Funktion des Steuerventils 14 erheblich weniger, als dies ohne Vorspannung der Fall wäre. Die Dämpfungskammern 38, 46 werden somit immer dann unter Druck gesetzt, wenn beim Senkenvorgang in der Steuerkammer 42 der Zwischendruck aufgebaut wird. Da jedoch in den Stellungen Heben und Neutral des Steuerschiebers 37 dieser Zwischendruck in der Steuerkammer 42 abgebaut wird, verhindert das Rückschlagventil 65 ein zu schnelles Entweichen des Zwischendruckes aus dem Dämpfungskammern 38, 46.

Durch den Aufbau des relativ niedrigen Zwischendruckes in den Dämpfungskammern 38, 46 wird zudem erreicht, dass von beiden Dämpfungskammern zu den danebenliegenden Rücklaufkammern 39 bzw. 45 Leckölströme entstehen, welche die unerwünschte Luft aus den Dämpfungskammern 38, 46 in direkter oder auch in gelöster Form mitnimmt. Selbst bei lang anhaltendem Betrieb des Regelventils 11 werden somit Luftpolster in den Dämpfungskammern aufgezehrt, so dass die Wirksamkeit der Dämpfungseinrichtung nicht gefährdet wird. Die Grösse der Leckölströme kann durch die Wahl der Grösse des Spiels zwischen Schieberbohrung 37' und äusseren Kolbenabschnitten am Steuerschieber 37 beeinflusst werden.

Auch wenn während des Senkenvorganges das nachgeschaltete Wegeventil 84 betätigt und von dort ein hoher Druck angefordert wird, verhindert die Druckminderfunktion des Drosselventils 13, dass der Zwischendruck in der Steuerkammer 42 wesentlich überschritten wird. Infolge des für die Dämpfungseinrichtung verfügbaren Zwischendruckes von wenigen bar, können die Schaltmagnete 71 und 72 in normaler Bauweise ausgeführt werden und brauchen nicht hochdruckfest zu sein. Durch die Beaufschlagung der Dämpfungskammern 38, 46 nur zeitweise während des Senkenvorganges wird erreicht, dass die damit verbundenen Energieverluste infolge von Leckölströmen relativ niedrig sind.

Durch die stetige Entlüftung der Dämpfungskammern 38, 46 bleibt die Wirksamkeit der Dämpfungseinrichtung auch bei länger andauerndem Betrieb voll erhalten, so dass gerade bei einer Ansteuerung mit getakteten Schaltmagneten die Genauigkeit des Steuerventils 14 nicht nachlässt. Mit dieser Dämpfungseinrichtung braucht in vorteilhafter Weise nicht in einen Neutralumlauf eingegriffen zu werden, wodurch meist die Gefahr besteht, dass der Durchflusswiderstand erhöht wird. Auch macht diese Dämpfungseinrichtung die Funktion des Regelwegeventils 11 unabhängig davon, welche Druckverhältnisse in Rücklaufanschlüssen oder im Weiterlaufkanal 83 herrschen.

Selbstverständlich sind bei der gezeigten Steuereinrichtung 10 Änderungen möglich, ohne vom Gedanken der Erfindung abzuweichen. So kann anstelle des 3-Wege-Drosselventils 13 auch ein Zweiwege-Drosselventil treten, das keinen Weiterlauf aufweist. Obwohl die gezeigte Dämpfungseinrichtung in Verbindung mit den getakteten Magneten 71, 72 zur Ansteuerung des Steuerventils 14 eine besonders vorteilhafte Kombination ergibt, kann diese Dämpfungseinrichtung vorteilhaft auch dann verwendet werden, wenn der Steuerschieber 37 von aussen her mechanisch angesteuert wird. Bei einer mechanischen Ansteuerung werden zwischen Steuerschieber 37 und Betätigungsstössel 73, 74 noch nachgebende, kraftübertragende Glieder geschaltet, wie dies an sich bekannt ist. Ebenso ist es möglich, anstelle von getakteten Schaltmagneten auch analog angesteuerte Proportionalmagnete zum Betätigen des Steuerschiebers 37 zu verwenden. Auch sonstige Änderungen sind möglich, ohne vom Gedanken der Erfindung abzuweichen.

**Patentansprüche**

1. Hydraulische Steuereinrichtung (10) für ein von einem Hydromotor (75) angetriebenes, insbesondere an einem landwirtschaftlichen Fahrzeug angebautes Arbeitsgerät (79), mit einem Steuerschieber (37), der eine den Druckmittelstrom zum Hydromotor (75) beim Heben beeinflussende, erste Steuerkante (58) und eine den vom Hydromotor (75) zum Tank (40) abfliessenden Druckmittelstrom beim Senken beeinflussende, zweite Steuerkante (59) aufweist, sowie mit einem dem Steuerschieber (37) vorgeschalteten, federbelasteten Drosselschieber (18), der in eine von einer Druckmittelquelle (81) über den Drosselschieber (18) und die erste Steuerkante (58) des Steuerschiebers (37) zum Hydromotor (75) geführte Arbeitsleitung (34) geschaltet ist und eine lastdruckunabhängige Steuerung der Hebenfunktion ermöglicht, mit zwei dem Steuerschieber (37) zugeordneten Rücklaufkammern (39, 45) und mit einer Steuerkammer (42), die nur in Senkenfunktion mit einem gegenüber dem Arbeitsdruck für den Hydromotor (75) reduzierten Steuerdruck beaufschlagbar ist, dadurch gekennzeichnet, dass dem Steuerschieber (37) zwei dessen beiden Bewegungsrichtungen entsprechende Dämpfungskammern (38, 46) zugeordnet sind, dass die Dämpfungskammern (38, 46) über einen Ausgleichskanal (63) mit einer darin liegenden Drossel (64) miteinander verbunden sind und dass die Steuerkammer (42) über ein zum Ausgleichskanal (63) hin öffnendes Rückschlagventil (65) mit dem Ausgleichskanal (63) verbunden ist.

2. Steuereinrichtung nach Anspruch 1, dadurch gekennzeichnet, dass jede Dämpfungskammer (38, 46) von einem stirnseitigen Ende des Steuerschiebers (37) begrenzt wird und neben jeder Dämpfungskammer (38, 46) eine Rücklaufkammer (39, 45) angeordnet ist.

3. Steuereinrichtung nach Anspruch 1 oder 2, dadurch gekennzeichnet, dass der Drosselschieber (18) Teil eines 3-Wege-Drosselventils (13) ist und zwei Steuerkanten (29, 31) aufweist.

4. Steuereinrichtung nach einem oder mehreren der Ansprüche 1 bis 3, dadurch gekennzeichnet, dass von der Steuerkammer (42) eine Steuerleitung (52) abgeht, deren Druck zum Steuern eines in die Arbeitsleitung (34) zwischen Steuerschieber (37) und Hydromotor (75) geschalteten Sperrblocks (15) dient.

5. Steuereinrichtung nach einem der Ansprüche 1 bis 4, dadurch gekennzeichnet, dass die Steuerkammer (42) in Neutralstellung und in Hebenstellung des Steuerschiebers (37) von der Arbeitsleitung (34) abgesperrt ist.

6. Steuereinrichtung nach einem oder mehreren der Ansprüche 1 bis 5, dadurch gekennzeichnet, dass in die Dämpfungskammern (38, 46) dem Steuerschieber (37) zugeordnete Betätigungsstössel (73, 74) ragen und der Steuerschieber (37) durch Rückstellfedern (66, 67) in der Neutralstellung zentriert ist.

7. Steuereinrichtung nach einem oder mehreren der Ansprüche 1 bis 6, dadurch gekennzeichnet, dass die Betätigungsstössel (73, 74) von getakteten Schaltmagneten (71, 72) betätigt werden.

8. Steuereinrichtung nach einem oder mehreren der Ansprüche 1 bis 6, dadurch gekennzeichnet, dass die Betätigungsstössel (73, 74) mechanisch betätigt werden und zwischen jedem Betätigungsstössel und dem Steuerschieber ein nachgiebiges Kraftübertragungsglied geschaltet ist.

**Revendications**

1. Dispositif de commande hydraulique (10) pour un outil (79) monté sur un véhicule entraîné par un moteur hydraulique (75) notamment un véhicule à usage agricole, et comportant un tiroir de commande (37) qui présente une première arête (58) pour influencer la veine de fluide sous pression du moteur hydraulique (75) au cours de l'opération de levage et une seconde arête de commande (59) qui influence la veine de fluide sous pression s'écoulant du moteur hydraulique (75) vers le réservoir (40) lors de l'abaissement, ainsi qu'un tiroir d'étranglement (18) chargé par ressort et monté en amont du tiroir de commande (37), tiroir d'étranglement qui est prévu dans une conduite (34) allant d'une source de fuite sous pression (81) en passant par un tiroir d'étranglement (18) et la première arête de commande (58) du tiroir de commande (37) vers le moteur hydraulique (75) et permettant de commander la fonction de levage indépendamment de la charge, avec deux chambres de retour (39, 45) associées au tiroir de commande (37) et une chambre de commande (42) qui ne peut être sollicitée qu'en fonction d'abaissement par une pression de commande réduite par rapport à la pression de fonctionnement du moteur hydraulique (75), dispositif de commande caractérisé en ce que le tiroir de commande (37) comporte deux chambres d'amortissement (38, 46) correspondant à ses deux directions de déplacement, les chambres d'amortissement (38, 46) étant reliées l'une à l'autre par un canal d'équilibrage (63) équipé d'un organe d'étranglement (64) et la chambre de commande (42) est reliée au canal d'équilibrage (63) par une vanne d'arrêt (65) s'ouvrant en direction du canal d'équilibrage (63).

2. Dispositif de commande selon la revendication 1, caractérisé en ce que chaque chambre d'amortissement (38, 46) est délimitée par l'extrémité frontale du tiroir de commande (37) et comporte une chambre de retour (39, 45) à côté de chaque chambre d'amortissement (38, 46).

3. Dispositif de commande selon l'une quelconque des revendications 1 ou 2, caractérisé en ce que le tiroir d'étranglement (18) fait partie d'un tiroir d'étranglement à trois voies (13) et comporte deux arêtes de commande (29, 31).

4. Dispositif de commande selon l'une quelconque des revendications 1 à 3, caractérisé par une conduite de commande (52) partant de la chambre de commande (42), conduite dont la pression sert à commander un bloc d'arrêt (15) monté dans la conduite de travail (34) entre le tiroir de commande (37) et le moteur hydraulique (75).

5. Dispositif de commande selon l'une quelconque des revendications 1 à 4, caractérisé en ce que la chambre de commande (42) est fermée par rapport à la conduite de travail (34) lorsque le tiroir de commande (37) est en position neutre ou en position de levage.

6. Dispositif de commande selon l'une quelconque des revendications 1 à 5, caractérisé en ce que des poussoirs de manœuvre (73, 74) viennent en saillie dans les chambres d'amortissement (38, 46) du tiroir de commande (37) et en ce que le tiroir de commande (37) est centré en position neutre par des ressorts de rappel (66,67).

7. Dispositif de commande selon l'une quelconque des revendications 1 à 6, caractérisé en ce que les poussoirs de manœuvre (73, 74) sont actionnés par des électro-aimants commandés en cadence (71, 72).

8. Dispositif de commande selon l'une quelconque des revendications 1 à 6, caractérisé en ce que les poussoirs de manœuvre (73, 74) sont actionnés mécaniquement et un organe de transmission souple est branché entre chaque poussoir de manœuvre et le tiroir de commande.

## Claims

1. Hydraulic control device (10) for an implement (79) driven by a hydromotor (75), particularly mounted on an agricultural vehicle, having a control slide (37) which exhibits a first control edge (58) influencing the flow of pressurised medium to the hydromotor (75) during the ascent and a second control edge (59) influencing the flow of pressurised medium from the hydromotor (75) to the tank (40) during the descent, also having a springloaded throttle slide (18) preceding the control slide (37), which is connected into a work pipe (34) passing from a pressurised medium source (81) through the throttle slide (18) and the first control edge (58) of the control slide (37) to the hydromotor (75) and permits a control of the ascent function independent of the load pressure, with two return chambers (39, 45) associated with the control slide (37) and with a control chamber (42) which can be subjected to a control pressure reduced compared to the work pressure for the hydromotor (75) in the descent function only, characterised in that two attenuation chambers (38, 46) corresponding to its two directions of movement are associated with the control slide (37), that the attenuation chambers (38, 46) are mutually connected through an equalisation duct (63) with a throttle (64) located therein, and that the control chamber (42) is connected to the equalisation duct (63) through a nonreturn valve (65) opening towards the equalisation duct (63).

2. Control device according to Claim 1, characterised in that each attenuation chamber (38, 46) is delimited by an end face of the control slide (37), and a return chamber (39, 45) is arranged beside each attenuation chamber (38, 46).

3. Control device according to Claim 1 or 2, characterised in that the throttle slide (18) is part of a 3-way throttle valve (13) and exhibits two control edges (29, 31).

4. Control device according to one or more of Claims 1 to 3, characterised in that a control pipe (52), the pressure of which serves to control a shut-off block (15) connected into the work pipe (34) between control slide (37) and hydromotor (75), starts from the control chamber (42).

5. Control device according to any of Claims 1 to 4, characterised in that the control chamber (42) is shut-off from the work pipe (34) in the neutral position and in the ascent position of the control slide (37).

6. Control device according to one or more of Claims 1 to 5, characterised in that actuating push rods (73, 74) associated with the control slide (37) project into the attenuation chambers (38, 46) and the control slide (37) is centred in the neutral position by return springs (66, 67).

7. Control device according to one or more of Claims 1 to 6, characterised in that the actuating push rods (73, 74) are actuated by pulsed switching magnets (71, 72).

8. Control device according to one or more of Claims 1 to 6, characterised in that the actuating push rods (73, 74) are actuated mechanically and a yielding force transmission element is connected between each actuating push rod and the control slide.

1/1